# EUROPEAN PATENT APPLICATION

(11) **EP 4 572 387 A1**
(43) Date of publication of application: **18.06.2025**
(21) Application number: 23853075.2
(22) Date of filing: 11.08.2023
(51) Int. Cl.: H04W 24/10, H04W 24/08, H04W 72/21, H04L 5/00, H04B 17/345, H04B 17/373

(54) **METHOD BY WHICH TERMINAL PERFORMS MEASUREMENTS IN WIRELESS COMMUNICATION SYSTEM, AND DEVICE THEREFOR**

(30) Priority: 11.08.2022 KR 20220100916; 11.08.2022 KR 20220100920
(71) Applicant: LG Electronics Inc., Yeongdeungpo-gu Seoul 07336 (KR)
(72) Inventor: SHIM, Jaenam, Seoul 06772 (KR); KO, Hyunsoo, Seoul 06772 (KR); KIM, Seonwook, Seoul 06772 (KR); AHN, Joonkui, Seoul 06772 (KR)
(74) Representative: Plasseraud IP
(86) International application number: PCT/KR2023/011942
(87) International publication number: WO 2024/035209

(57) **Abstract**

A method by which a terminal performs measurements related to positioning in a wireless communication system and a device therefor, according to various embodiments, are disclosed. Disclosed are a method and a device therefor, the method comprising: a step of receiving resource configuration information including CLI measurement resources related to a CLI measurement; a step in which the CLI measurement for the CLI measurement resources is triggered; and a step of reporting measurement information about the CLI measurement to a base station, wherein the CLI measurement is triggered on the basis of indication information about the CLI measurement resources being included in downlink control information (DCI) which triggers reporting of channel state information (CSI).

## Description

### TECHNICAL FIELD

The following description relates to a method of performing measurement by a user equipment (UE) in a wireless communication system, and an apparatus therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

### DISCLOSURE

### Technical Problem

The present disclosure provides a method and apparatus for minimizing interference between inter-cell user equipments (UEs) due to sub-band full duplex (SBFD) and/or single frequency full duplex (SFFD) operation at a base station (BS) by scheduling/configuring SBFD slots and/or SFFD slots based on CLI measurement information reported through L1/L2.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### Technical Solution

According to an aspect, a method of performing measurement related to cross link interference (CLI) by a user equipment (UE) in a wireless communication system includes receiving resource configuration information including a CLI measurement resource related to CLI measurement, receiving triggering of the CLI measurement for the CLI measurement resource, and reporting measurement information for the CLI measurement to a base station (BS), wherein the CLI measurement is triggered based on that downlink control information (DCI) that triggers reporting of channel state information (CSI) includes indication information for the CLI measurement resource.

The resource configuration information may include information about at least one of sounding reference signal (SRS) resources and CLI-received signal strength indicator (CLI-RSSI) resources.

The resource configuration information may be received through CSI configuration information including non-zero power (NZP) channel state information - reference signal (CSI-RS) for measuring the CSI.

The CLI measurement resource may be configured based on a sub-band full duplex (SBFD) slot or a single frequency full duplex (SFFD) slot.

The CLI measurement information may be included in CSI reporting triggered by the DCI and reported to the BS.

The CLI measurement information may be included in uplink control information (UCI) and reported to the BS through a physical uplink control channel (PUCCH) or a physical uplink shared channel (PUSCH).

The CLI measurement information may be reported to the BS as CSI Part 2 in uplink control information (UCI) including hybrid automatic repeat request acknowledgement (HARQ-ACK), scheduling request (SR), CSI Part 1, and the CSI Part 2.

The CLI measurement information may be piggybacked on a physical uplink shared channel (PUSCH) and reported to the BS.

The CLI measurement information may be reported to the BS when a value of the CLI measured for the CLI measurement resource is greater than or equal to a pre-configured threshold.

According to another aspect, a user equipment (UE) for performing measurement related to cross link interference (CLI) in a wireless communication system includes a radio frequency (RF) transceiver, and a processor connected to the RF transceiver, wherein the processor controls the RF transceiver to receive resource configuration information including a CLI measurement resource related to the CLI measurement, receive triggering of the CLI measurement for the CLI measurement resources, and report measurement information for the CLI measurement to a base station (BS), and the CLI measurement is triggered based on that downlink control information (DCI) that triggers reporting of channel state information (CSI) includes indication information for the CLI measurement resource.

According to another aspect, a method of receiving reporting of measurement information related to cross link interference (CLI) by a base station (BS) in a wireless communication system includes transmitting, to a user equipment (UE), resource configuration information including a CLI measurement resource related to CLI measurement, triggering the CLI measurement for the CLI measurement resource to the UE, and receiving reporting of the measurement information for the CLI measurement, wherein the CLI measurement is triggered based on that downlink control information (DCI) that triggers reporting of channel state information (CSI) includes indication information for the CLI measurement resource.

### Advantageous Effects

Various embodiments may minimize interference between inter-cell equipments (UEs) due to sub-band full duplex (SBFD) and/or single frequency full duplex (SFFD) operation at a base station (BS) by scheduling/configuring SBFD slots and/or SFFD slots based on CLI measurement information reported through L1/L2.

Alternatively, CLI measurements/reporting at L1/L2 may be triggered and reported efficiently through the existing DCI types that trigger CSI measurements/reports without defining and introducing a new triggering scheme.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 is a diagram illustrating physical channels and a signal transmission method using the physical channels, which may be used in the embodiment;
FIG. 6 illustrates a process in which a UE transmits ACK/NACK via PUSCH.
FIG. 7 illustrates an example of a CSI-related procedure.
FIG. 8 is a diagram for explaining a method of performing a full duplex operation in an NR system.
FIG. 9 and FIG. 10 are diagrams for explaining sub-band full duplex (SBFD) and single frequency full duplex (SFFD) operations.
FIG. 11 is a diagram for explaining a method of performing CLI measurements by a UE.
FIG. 12 is a diagram for explaining a method for a BS to receive CLI measurement information from a UE.
FIG. 13 illustrates a communication system applied to the present disclosure;
FIG. 14 illustrates wireless devices applicable to the present disclosure.
FIG. 15 illustrates another example of a wireless device to which the present disclosure is applied.

### DETAILED DESCRIPTION

A wireless communication system is a multiple access system that supports communication with multiple users by sharing available system resources (e.g., bandwidth, transmission power, etc.). Examples of multiple access systems include a CDMA (code division multiple access) system, an FDMA (frequency division multiple access) system, a TDMA (time division multiple access) system, an OFDMA (orthogonal frequency division multiple access) system, a SC-FDMA (single carrier frequency division multiple access) system, and an MC-FDMA (multi carrier frequency division multiple access) system.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

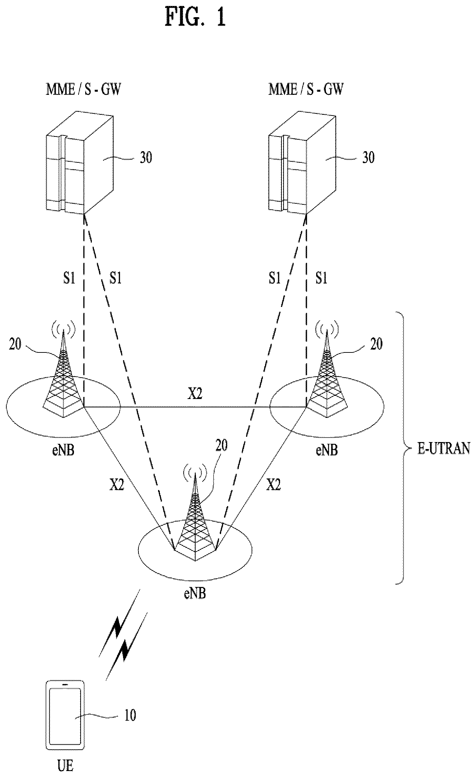

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

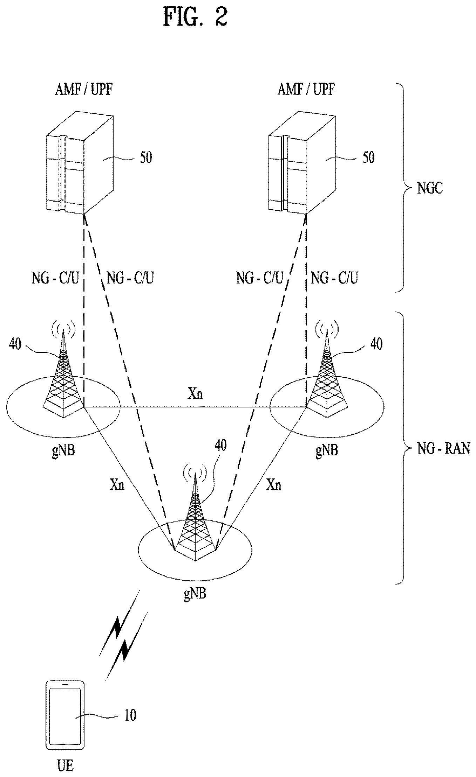

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

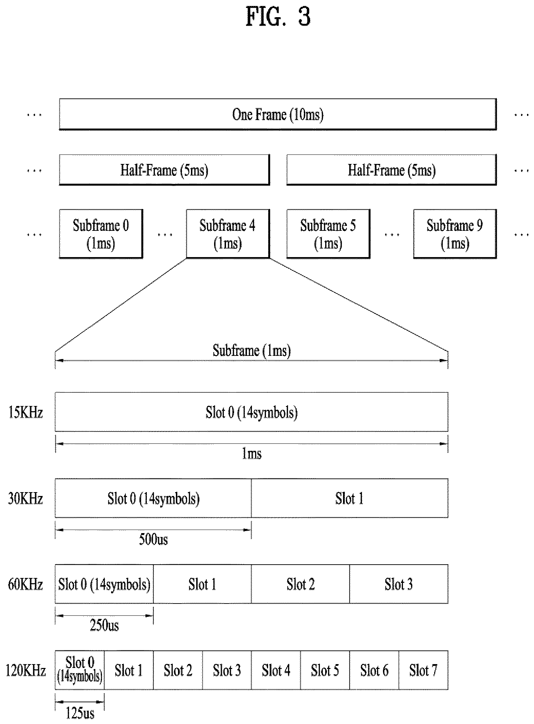

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot Nslotsymb, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^{u}) | N^{slot}_{symb} | N^{frame.u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

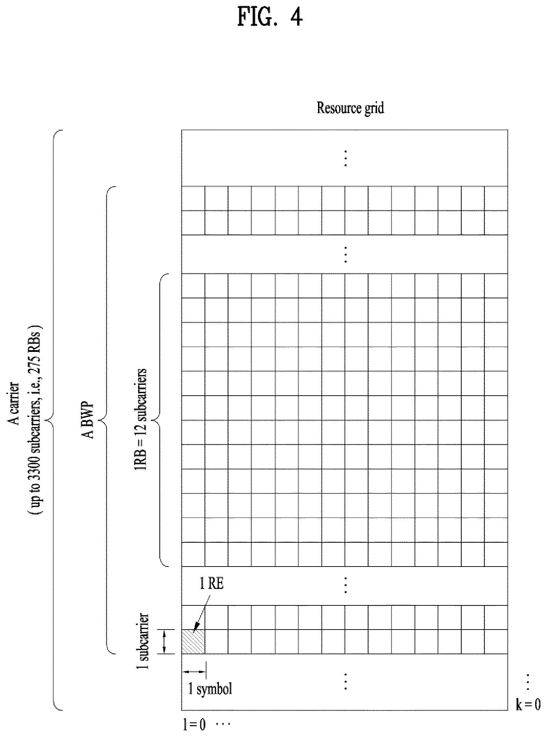

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

### Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signaling, etc.). The BS may instruct the UE to switch to another configured DL/UL BWP (through L1 signaling, MAC CE or RRC signaling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

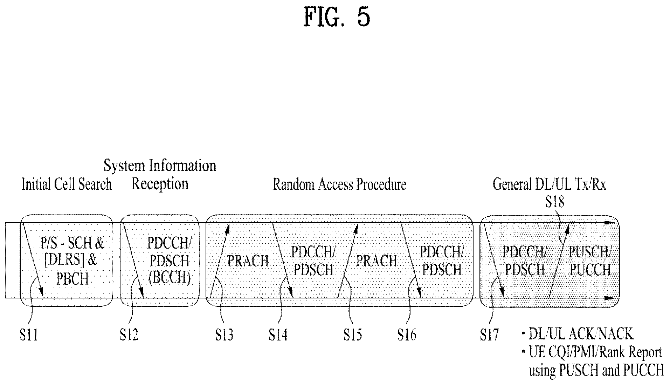

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

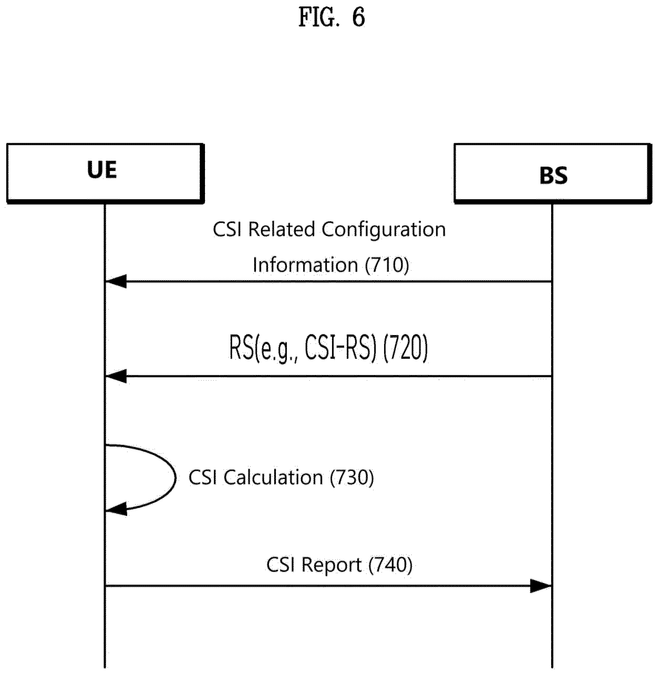

FIG. 6 illustrates an exemplary ACK/NACK transmission process.

Referring to FIG. 6, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

Below, the PUSCH transmission process is described.

the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB

### CSI related operation

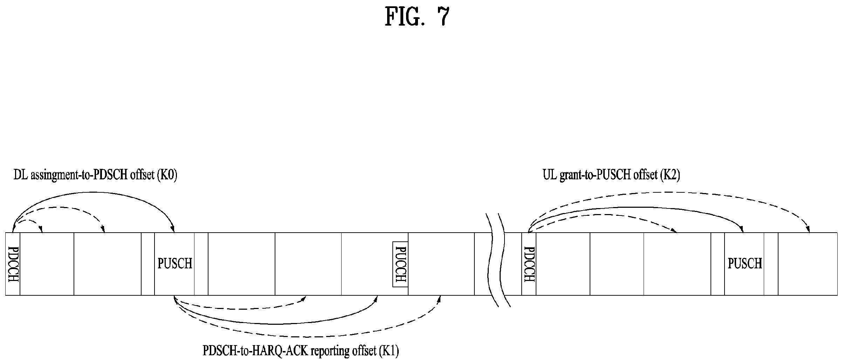

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

CSI codebooks defined in the NR standard (e.g., PMI codebook) may be broadly divided into Type I codebook and Type II codebook. The Type I codebook primarily targets single user (SU)-MIMO, supporting both high-order and low-order. The Type II codebook may mainly support MI-MIMO supporting up to 2 layers. Compared to Type I, the Type II codebook may provide more accurate CSI, but signaling overhead may increase correspondingly. The Enhanced Type II codebook is introduced to address the CSI overhead shortcomings of the existing Type II codebook by reducing the payload of the codebook by considering a correlation of the frequency axis.

CSI reporting via a PUSCH may be configured to Part 1 and Part 2. The Part 1 has a fixed payload size and is used to identify the number of bits of information in the Part 2. The Part 1 may be transmitted in its entirety before the Part 2.
- For Type I CSI feedback, the Part 1 includes RI (if reported), CRI (if reported), and CQI of a first code word. The Part 2 includes PMI, and when RI > 4, the Part 2 includes CQI.
- For Type II CSI feedback, the Part 1 includes an indication of the number of non-zero WB amplitude coefficients per layer of RI (if reported), CQI, and Type II CSI. The Part 2 includes the PMI of Type II CSI.
- For Enhanced Type II CSI feedback, the Part 1 includes an indication of the total number of non-zero WB amplitude coefficients for all layers of RI (if reported), CQI, and Enhanced Type II CSI. The Part 2 includes the PMI of Enhanced Type II CSI.

If CSI reporting on PUSCH includes two parts and the CSI payload to be reported is less than a payload size provided by the PUSCH resources allocated for CSI reporting, the UE may partially omit Part 2 CSI.

Semi-persistent CSI reporting performed in PUCCH format 3 or 4 supports Type II CSI feedback, but supports only Part 1 of Type II CSI feedback.

### Quasi-co location (OCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.
- 'QCL- TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Beam Management (BM)

BM is a series of processes for acquiring and maintaining a set of BS (or transmission and reception point (TRP)) beams and/or UE beams available for DL and UL transmissions/receptions. BM may include the following processes and terminology.

Beam measurement: The BS or the UE measures the characteristics of a received beamformed signal.

Beam determination: The BS or the UE selects its Tx beam/reception (Rx) beam.

Beam sweeping: A spatial domain is covered by using Tx beams and/or Rx beams in a predetermined manner during a predetermined time interval.

Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

A DL BM process may include (1) transmission of beamformed DL RSs (e.g., CSI-RSs or SSBs) from a BS and (2) beam reporting from a UE.

Here, the beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

### Full duplex operation for NR

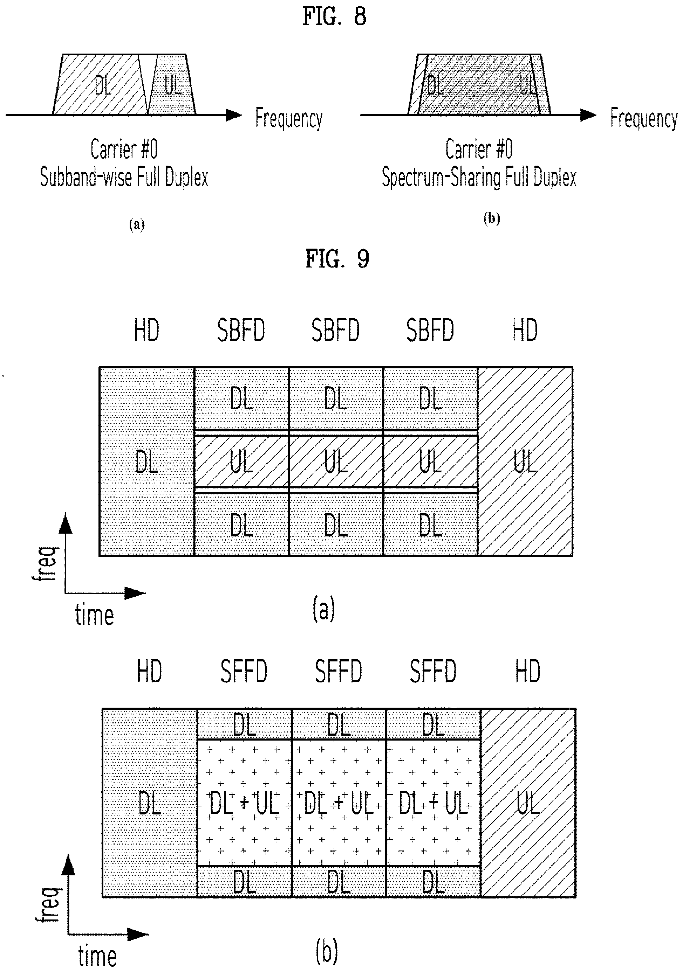

FIG. 8 is a diagram for explaining a method of performing a full duplex operation in an NR system.

In 5G, new types of services such as Extended reality (XR), AI-based services, and self-driving cars have been made. These services have the characteristics of dynamically changing traffic in both DL and UL directions and require low latency in packet transmission. 5G services may experience explosive increases in traffic load to support these diverse new use cases. On the other hand, the existing semi-static or dynamic TDD UL/DL configurations may have limitations in transmission time delay and interference between operators. The existing FDD method may have limitations in terms of efficient frequency resource utilization in the DL/UL directions. Therefore, introduction of a full duplex operation within a single carrier has been discussed for low latency and efficient resource utilization in NR.

Referring to FIG. 8, a method of applying the full duplex operation in an intra-carrier is illustrated. In detail, the full duplex operation may be considered as a subband-wise full duplex (SB-FD) scheme illustrated in (a) of FIG. 8 and a spectrum-sharing full duplex (SS-FD) scheme illustrated in (b) of FIG. 8.

For SB-FD, transmission and reception of DL and UL may be performed with different frequency resources in the same carrier. That is, DL and UL may have different frequency resources for the same time resource. For SS-FD, transmission and reception of DL and UL are performed through the same frequency resource or overlapped frequency resources in the same carrier. That is, for the same time resource, DL and UL may be allocated the same or overlapping frequency resources.

The full duplex operation may be combined with the existing half-duplex operation. For example, in the existing half-duplex-based TDD operation, only some time resources may be used for the full duplex operation. In time resources in which the full duplex operation is performed, either SB-FD or SS-FD operations may be performed.

Hereinafter, in a time resource operating as FD (e.g., SB-FD operation or SS-FD operation), a frequency resource operating as DL from among all frequency resources is defined as a DL sub-band, and a frequency resource operating as UL is defined as a UL sub-band.

In the case of full duplex (hereinafter, FD) operation as described above, the FD operation may be performed both from perspectives of a gNB and a UE. For example, both the gNB and the UE may perform transmission and reception of DL/UL simultaneously by using the same or different frequency resources in the same time resource. Alternatively, only the gNB may perform an FD operation (in the same time resource) and the UE may perform an HD operation. The gNB may simultaneously perform transmission and reception of DL and UL by using the same or different frequency resources in the same time resource, but the UE may perform only DL reception or UL transmission in a specific time resource. In this case, the gNB may perform the FD operation in a way that performs DL transmission and UL reception for different UEs at the same time (or, the same time resource).

The content described below is generally explained assuming that the gNB performs the FD operation and the UE performs the HD operation, but may also be applied to a case in which both the gNB and the UE perform the FD operation. Based on the above discussion, the following describes in detail a method of configuring a BWP resource for an intra-carrier FD operation.

### Background of FDR

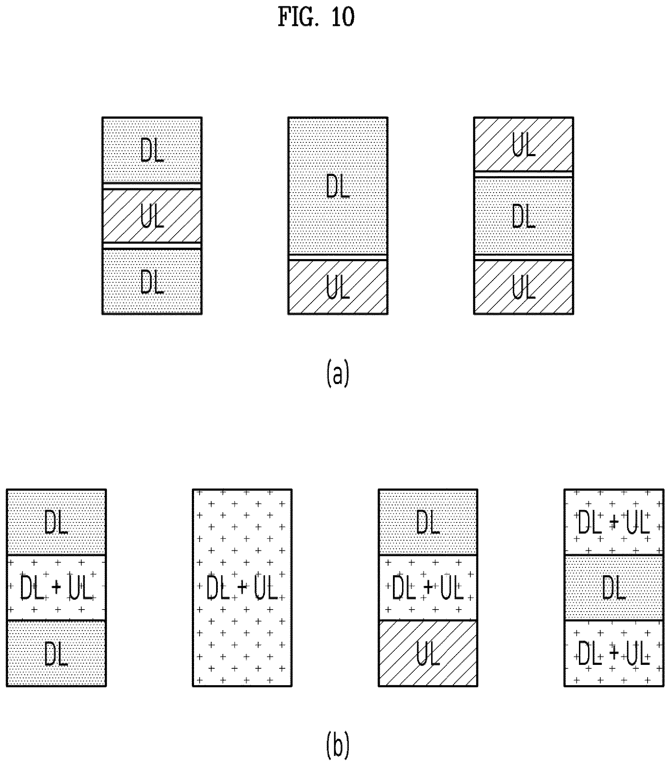

FIG. 9 and FIG. 10 are diagrams for explaining sub-band full duplex (SBFD) and single frequency full duplex (SFFD) operations.

Introduction of FDR has been discussed in certain scenarios (e.g. 3GPP RAN plenary). There are two types of FDRs discussed in the above scenarios, first, there is an FDR in which the gNB transmits and receives DL and UL (or transmits DL and receives UL) at the same frequency at the same time, and the other is an FDR in which the gNB transmits and receives DL and UL (or transmits DL and receives UL) at different frequencies at the same time. Here, different frequencies, unlike FDD, mean different frequency resources but different frequencies within the carrier or spectrum. For all cases, the UE may or may not support FDR, which means transmitting and receiving at the same time, whereas for all cases, it is assumed that the gNB performs transmitting and receiving at the same time.

In detail, referring to FIG. 9, time resources may include time resources operating in half duplex (HD) and time resources operating in full duplex (FD), such as SB-FD or SS-FD. The time resources may include some time resources for the operation of SB-FD and the remaining time resources for the operation of HD, as illustrated in (a) of FIG. 9. The time resources may include time resources for the operation of SS-FD and the remaining time resources for the operation of HD, as illustrated in (b) of FIG. 9. In this case, a unit of time resource (for an operation as SS-FD, an operation as SB-FD, or an operation as HD) may be a slot or symbol unit. In the time resources operating as SB-FD, some frequency resources may be used as DL resources, and some frequency resources may be used as UL resources.

In operating this FDR, the gNB may consider dividing time durations into half duplex (HD) and full duplex (FD). This may be broadly divided into sub-band full duplex (SBFD) and single frequency full duplex (SFFD), and a slot configuration and cell resource pattern therefor may be considered to operate based on the following example.

First, the SBFD may be considered as (a) of FIG. 9 and (a) of FIG. 10. In detail, referring to (a) of FIG. 10, a sub-band region of DL and a sub-band region of UL may not overlap each other. In this case, a guard band may exist between the sub-band region of DL and the sub-band region of UL (example of slot configuration). Alternatively, referring to (a) of FIG. 9, the SBFD operation may be performed based on a resource pattern of a cell or BS. For example, in the resource pattern, half-duplex (HD) slots/symbols and SBFD slots/symbols may be TDMed with each other.

Alternatively, SFFD may be considered as examples such as those in (b) of FIG. 9 and (b) of FIG. 10. In detail, referring to (b) of FIG. 10, a sub-band region of DL and a sub-band region of UL may overlap each other. Alternatively, referring to (b) of FIG. 9, the SBFD operation may be performed based on a resource pattern of a cell or BS. For example, in the resource pattern, half-duplex (HD) slots/symbols and SBFD slots/symbols may be TDMed with each other.

In the above-described cases, SBFD (or SFFD) and dynamic/flexible TDD (hereinafter, d/f TDD) may be considered. Additionally, TDD configurations between cells or BSs may not be identical. Regarding these two environments, the similarities and differences in terms of CLI are described below.
(1) In terms of measurement resource
   1) For d/f TDD
      - Aggressor: Inter-cell UE
      - HD slot only
   2) For SBFD
      - Aggressor: Intra-cell UE and Inter-cell UE
      - HD slot & SBFD slot
         -- If BWP of SBFD slot is similar with HD BWP: Same with HD slot
         -- If BWP of SBFD slot is different from HD BWP: e.g., measurement outside of active BWP, DL/UL sub-band

Up to Rel-17, the existing cross link interference (CLI) measurements may measure RSRP in SRS resources according to the existing scenarios, and RSSI measurement may be made for CLI-RSSI-resources. SRS resources for CLI have restrictions on the existing resource configuration, and CLI-RSSI-resource is a resource configured for CLI. All of these resources are resources in the time/frequency domain, and the following configurations are possible for CLI up to Rel-17. The method of configuring resources related to CLI may be briefly summarized as follows (see TS 38.331).
(1) Measurement resources
   > SRS-Resource
      - DL BWP id may be indicated to derive a reference point of SRS resource. In CLI measurement, there is a feature that links resources (especially DL) to BWP.
      - For CLI SRS-RSRP measurements
         -- Resource type: Only periodic type (resource type = periodic)
         -- Periodicity: slot 1280, 2560 may not be configured (slot level, 1 to max 640)
         -- Number of symbols, repetition factor: n1
         -- Freq. hopping: b-hop (symbol level hopping) -> b-SRS(BW of SRS) -> frequency position index is constant (unless reconfigured)
         -- Sequence hopping, ptrs port, spatial relation info. -> disabled
         -- SRS Port 1
   > CLI-RSSI-Resource
      - Minimum RB 4, within active DL BW
         -- Configure to min. 4 to eliminate ambiguity in introduction of Ref. SCS (15 to 120 SCS)
      - Symbols within a slot boundary (w.r.t. reference SCS)
      - UE performs CLI-RSSI measurement with SCS of active BWP (regardless of ref. SCS)
      - Periodicity, offset: slot level (1 to max 640)
      - QCL-D with latest received PDSCH and the latest monitored CORESET
(2) Measurement/report trigger
   > SRS-RSRP, CLI-RSSI
   > Event triggered or periodical
      - i1-event: interference exceeds absolute threshold
      - Report interval: 120 ms to 30 min

With respect to resources configured according to the above "(1)" and "(2)", the UE may perform CLI measurements, and when interference measured on the above-described configured resources exceeds an absolute threshold (i1-threshold), the UE may perform (periodic) measurements on the configured resources, and report a value for the measured interference via L3 signaling. The report related to the CLI does not have L1/L2 signaling. This may be configured to the UE via RRC in relation to the existing event-triggered report and periodical report of CLI. In detail, event-triggered reports and periodical reports may be configured as shown in Table 5 and Table 6 below (see TS 38.331).

**[Table 5]**

| ***CLI-EventTriggerConfig* field descriptions** |
|---|
| ***i1-Threshold*** |
| Threshold value associated to the selected trigger quantity (e.g. SRS-RSRP, CLI-RSSI) to be used in CLI measurement report triggering condition for event i1. |
| ***eventId*** |
| Choice of CLI event triggered reporting criteria. |
| ***maxReportCLI*** |
| Max number of CLI measurement resource to include in the measurement report. |
| ***reportAmount*** |
| *Number* of measurement reports. |
| ***reportOnLeave*** |
| Indicates whether or not the UE shall initiate the measurement reporting procedure when the leaving condition is met for a CLI measurement resource in *srsTriggeredList* or *rssiTriggeredList*, as specified in 5.5.4.1. |
| ***time To Trigger*** |
| Time during which specific criteria for the event needs to be met in order to trigger a measurement report. |

**[Table 6]**

| ***CLI-PeriodicalReportConfig* field descriptions** |
|---|
| ***maxReportCLI*** |
| Max number of CLI measurement resource to include in the measurement report. |
| ***reportAmount*** |
| *Number* of measurement reports. |
| ***reportQuantityCLI*** |
| The CLI measurement quantities to be included in the measurement report. |

Although it is not the purpose of CLI, the existing CSI reporting framework may measure/report L1-RSRP/SINR in CSI-RS resources, and the related features are as follows.
> Background
   - Best beam index is reported via CRI/SS/PBCH Block Resource Indicator (SSBRI) (with L1-RSRP/SINR)
      * SSBRI: SS/PBCH Block Resource Indicator, CRI: CSI-RS Resource Indicator
   - SINR -> for interference of intra-cell UEs
> Measure resource
   - CSI-RS (periodic/semi-persistent/aperiodic)
   - Rx filter with QCL-D
> Report
   - UCI -> periodic (PUCCH)/ semi-persistent (PUSCH or PUCCH)/aperiodic (PUSCH)
   - UCI mapping order: CRI -> L1-RSRP -> RI -> LI -> Padding bits -> PMI -> CQI
   - Part 1: (CRI/RI/CQII), Part2: (PMI/CQI2)

In relation to the CLI and/or CSI-RS content described above, interference from inter-cell UEs or interference from intra-cell UEs may be generated (or received) when the gNB operates in SBFD (or SFFD) or d/f TDD. In this case, the measurement/reporting of the existing CLI also needs to be performed quickly. Therefore, for this purpose, measurement/reporting for CLI needs to be performed based on L1/L2, and the method of performing measurement/reporting of CLI based on L1/L2 is described in detail below.

### Layer 1/ Layer 2 (L1L2) Cross Link Interference measurement trigger

Hereinafter, a method of instructing measurements and reports performed by a UE for UE-to-UE CLI via L1/L2 signaling and a method of transmitting and receiving the measurements and reports are described, but may be simply extended to gNB-to-gNB CLI or gNB-to-UE CLI. Hereinafter, a method of instructing L1/L2 CLI measurements is described in detail.

The existing CLI measurements may be performed on resources that are configured periodically or upon occurrence of specific events. However, when dynamic/flexible TDD or SBFD (or SFFD) is considered, the gNB needs to identify interference experienced by the UE without outdating it. Alternatively, if the scheduling is obtained by a centralized gNB, or multiple gNBs are serviced by the same operator, or information exchange between gNBs is enhanced, the CLI measurement results may be expected to be applied in the scheduler even if dynamic/flexible TDD and SBFD (or SFFD) are not considered. In this case, L1/L2 based CLI measurement and reporting may be required for application in a scheduler.

Therefore, unlike the existing method, the UE may be instructed to perform CLI measurements from the gNB through the method described below. The specific details are as follows:

### (1) Alt. 1

The UE may trigger CLI measurements and/or reports via MAC-CE and/or DCI for measurement resources configured by RRC signaling.

That is, the UE may be pre-configured by RRC signaling from the gNB for resources on which CLI measurements may potentially be performed, and may be instructed by MAC-CE and/or DCI to perform measurements related to CLI on the configured resources and report the measured CLI. In detail, the gNB may instruct the UE to perform L1/L2 CLI measurements and/or reporting in a way that reuses a framework of the existing CSI reporting. The existing CSI reporting may perform periodic/semi-persistent/aperiodic reporting for periodic/semi-persistent/aperiodic resources. Here, basing on the framework of the existing CSI reporting may mean based only on semi-persistent or aperiodic CSI reporting.

For example, in the CSI reporting configuration, not only NZP CSI-RS resources but also SRS resources (or CLI-RSSI resources) may be designated as resources for CLI measurement purposes. If CSI reporting is instructed for a specific resource ID from among the resources according to the CSI reporting configuration, the UE may report CSI and CLI (or CSI reporting and CLI measurement information) together. Alternatively, when configuring CSI reporting, if an SRS resource (or CLI-RSSI resource) is additionally designated as a resource for CLI measurement purposes in addition to the NZP CSI-RS resource, and CSI reporting is designated for an ID corresponding to the SRS resource, the UE may measure and report CLI. For example, the UE may measure and report CLI and/or CSI for the SRS resource if the ID indicated in the CSI reporting is an ID for the SRS resource.

That is, when the gNB is instructed to configure CSI reporting to the UE, the gNB may be instructed to use NZP-CSI-RS resources or CSI-IM resources as resources for CSI measurement and/or reporting. Within this same or similar framework, CLI measurement/reporting may be directed as a resource for CLI measurement. The existing interference measurements are performed on inter-cell interference using CSI-IM resources and intra-cell multi-user interference using NZP CSI-RS. For SBFD, an accurate interference level may be measured by measuring reference signals received power (RSRP) by using the sequence of SRS transmitted by an aggressor UE in the time domain resources for SBFD and all (or part) of the resources. Alternatively, if the resources are not identical, measurements of the received signal strength indicator (RSSI) may be performed.

### (2) Alt. 2.

The UE may trigger CLI measurement and/or reporting conditionally for measurement resources configured by RRC.

In detail, the UE may previously receive a configuration about CLI resources for potentially performing CLI measurements via RRC from the gNB. In this case, measurement and reporting for the CLI resources may be performed by an event without instructions such as MAC-CE/DCI. In detail, event trigger CLIs for specific time durations or frequency durations may be configured/specified separately. In this case, the UE may perform measurements on the CLI based on the separately configured/specified events, but may report the measured CLI only if there is a separate instruction. For example, the UE may perform measurements based on a threshold (event-related threshold) configured separately for each SBFD time duration (in which the gNB performs SBFD) and an HD time duration (in which the gNB operates in HD), and may perform reporting operations via L1/L2 if there is an instruction related to separate reporting. For example, the UE may assume/determine that CLI measurement and/or reporting is instructed by indication of a threshold value configured by the gNB. This measurement method may be a measurement method of event-based CLI (or event triggered CLI). For example, the UE may determine that reporting to the CLI is not instructed if an RSRP or RSSI of a value lower than the threshold is measured, and conversely, the UE may determine that reporting to the CLI is instructed if an RSRP or RSSI of a value higher than the threshold is measured.

As a solution to the problem of UCI payload size in cases in which event-based reporting is performed and in cases in which event-based reporting is not performed, a method of separately encoding the CLI reporting and an indicator indicating whether to include the CLI reporting in the UCI may be considered. In this way, the gNB may first decode the indicator included in the UCI to pre-recognize whether the UCI includes a (separately encoded) CLI reporting. In this case, the gNB may successfully receive UCI and PUSCH (even if the payload size of UCI changes depending on the performance of event-based CLI reporting).

If such CLI reporting is piggybacked on PUSCH similar to UCI (or if UCI is reported over PUSCH), a threshold for a predetermined RE size may be indicated to the UE via DCI/MAC-CE, or the like. CLI-RSSI resources may be allocated separately for SBFD time durations identified as per instructions. Alternatively, the UE may perform and report measurements related to the CLI on a periodic/semi-persistent/aperiodic basis based on separate thresholds for RSSI resources indicated for an SBFD time duration. Here, the SBFD time duration may be indicated through slot format determination, indicated based on BWP switching time information, or indicated based on time information (or time resources) related to RBs that are not used by the same BWP.

### L1 L2 CLI measurement and report

As described above, the existing CLI measurement/reporting (up to Rel-17) are performed either event-triggered (when the measured RSSI exceeds a certain threshold) or periodically (120 ms to 30 min). The existing CLI measurement/reporting reports RSSI measured using CLI-RSSI resources or RSRP measured using SRS. However, considering the dynamic/flexible TDD or SBFD method described above, (the existing CLI measurement/reporting) may lack dynamics. In particular, in the case of SBFD, an aggressor is an intra-cell UE (in the SBFD slot), and thus it may be expected that the gNB may quickly identify CLI information related to SBFD and apply the information in the scheduler. Here, the SBFD slot may be a time duration in which the UE operates in half duplex (HD) but the gNB performs transmission and reception (or DL transmission/UL reception) simultaneously. Alternatively, the existing dynamic/flexible TDD is not widely used because coordination of the gNB is difficult. Therefore, the coordination of the gNB needs to be strengthened for use of the existing dynamic/flexible TDD, and L1/L2 CLI measurement/reporting may be required to strengthen the coordination of the gNB. Hereinafter, a method of L1/L2 CLI measurement/reporting for enhancing coordination of the gNB is described in detail.

The existing CLI measurements may be performed on resources that are configured periodically or upon occurrence of specific events. However, when dynamic/flexible TDD or SBFD (or SFFD) is considered, the gNB needs to identify interference experienced by the UE without outdating it. Alternatively, if the scheduling is obtained by a centralized gNB, or multiple gNBs are serviced by the same operator, or information exchange between gNBs is enhanced, the CLI measurement results may be expected to be applied in the scheduler even if dynamic/flexible TDD and SBFD (or SFFD) are not considered. In this case, L1/L2 based CLI measurement and reporting may be required for application in a scheduler.

The following options may be considered when the UE reports CLI measurements instructed by the existing configuration via L1/L2 signaling, when the UE reports CLI measurements instructed by a separate L1/L2 signaling via L1/L2 signaling, or when the UE reports based on L1/L2 signaling for event triggered CLI measurements that are different from the existing ones. In particular, measurements of event-triggered CLI may mean not reporting measured CLI information if values (RSRP, RSSI) are measured less or less than or equal to a preset threshold. As such, there may be a need to address the issue of (changing) UCI payload size depending on whether event-based CLI measurement/reporting is performed. As a solution to the above issue, a method of using an indicator that indicates whether CLI information (or CLI reporting) is included in UCI as described above, or of encoding CLI information (or CLI report) separately may be considered. In this way, the gNB may first know whether the UCI includes CLI information by first decoding the indicator included in the received UCI, the gNB may successfully receive/decode the UCI and/or PUSCH (even if the UCI payload size changes depending on whether event-based CLI measurement/reporting is performed). In other words, if CLI reporting is similar to UCI (or, if UCI is reported on a PUSCH), and the UCI is piggybacked on the PUSCH, the threshold for a given RE size may be indicated by DCI/MAC-CE, or the like. CLI-RSSI resources may be allocated separately for SBFD time durations. Alternatively, the UE may perform and report measurements related to the CLI on a periodic/semi-persistent/aperiodic basis based on separate thresholds for RSSI resources indicated for an SBFD time duration. Here, the SBFD time duration may be indicated through slot format determination, indicated based on BWP switching time information, or indicated based on time information (or time resources) related to RBs that are not used by the same BWP.

### (1) Alt. 1

CLI measurement (or CLI information) reported via L1/L2 signaling may be treated as the existing UCI. In detail, for CLI measurements indicated by L1/L2 signaling (or, when reporting CLI measurements indicated by the existing configuration by L1/L2 signaling), the UE may define the CLI measurement result as an existing UCI (e.g., one of HARQ-ACK, SR, CSI part 1, and CSI part 2) and report the result to the gNB via a PUSCH and/or a PUCCH. For example, if CLI measurement information is defined as UCI of CSI part 2, the UE may report UCI of CSI part 2 including CLI reporting to the gNB via a PUSCH or a PUCCH. In this case, when an event triggered CLI is reported as UCI, the payload of the CLI reporting information (contents) (or the payload of the UCI) may be different depending on whether the event occurs. To prevent this, a certain number of bits may always be reflected in the UCI for event-triggered CLI measurement information (i.e. a certain number of bits may be reserved for event triggered CLI). In other words, considering that event-based CLI measurement information is added to the UCI, a certain number of bits may be reserved in advance in the payload of the UCI to which the event-based CLI measurement information may be mapped. In addition, (alternatively, separately from reservation of the specific number of bits) an indicator may be defined separately to indicate whether the UCI includes CLI measurement information triggered based on the event. In this case, the UE may report to the gNB, through a 1-bit indicator or the like, whether the UCI reported on a PUSCH or a PUCCH includes CLI measurement information triggered based on an event.

### (2) Alt. 2

CLI measurements reported via L1/L2 signaling may be defined or treated as a new type of UCI.

In detail, for CLI measurements indicated by L1/L2 signaling (or, when reporting CLI measurements indicated by the existing configurations by L1/L2 signaling), the UE may report the CLI measurement result (or CLI measurement information) to the gNB via a PUSCH and/or a PUCCH as a new type of UCI defined different from the existing UCI. For example, the newly defined UCI for the CLI measurement report may be transmitted only on a PUSCH. In this way, when a new type of UCI is transmitted on a PUSCH, the payload size may be determined in addition to the UCI payload or together with the existing UCI, and may be reported piggybacked on PUSCH. Alternatively, if L1/L2 CLI reporting includes M bits by a predetermined agreement or instruction, the UE may report the CLI reporting to the gNB by puncturing M bits in the PUSCH.

Alternatively, CLI measurement information may be reported only via a PUSCH, treated as the existing UCI, without defining a new type of UCI for CLI measurement information. For example, L1/L2 CLI measurements and/or reporting may only support semi-persistent reporting or aperiodic reporting. In this case, the CLI measurement information may be mapped to the PUSCH and reported based on the UCI piggyback rule in which the existing UCI is multiplexed on the PUSCH.

In this way, if the CLI measurement information is reported via a new type of UCI (or existing UCI without defining a new type of UCI), the UE may report the CLI measurement information to the gNB via the PUSCH. It is necessary to define how many REs in the PUSCH the new type of UCI (or existing UCI without defining a new type of UCI) for the CLI measurement information is mapped to. The current NR structure is defined by a rule on how many REs of PUSCH are mapped differently depending on whether UL-SCH is present or not, in the order of HARQ-ACK -> CSI part 1 -> CSI part 2 for UCI. In other words, in the current NR structure, the number of REs mapped to the PUSCH may be defined differently based on predefined rules depending on whether there is a uplink shared channel (UL-SCH) in the order of HARQ-ACK -> CSI part 1 -> CSI part 2 for UCI or there is no UL-SCH (see section 6.3.2.4 of TS 38.212). The basic rule is that the number of resource elements (REs) to be used for UCI transmission in an OFDM symbol is calculated in the order of HARQ-ACK, CSI part 1, and CSI part 2, in addition to the number of REs of UCI for CLI measurement reporting. For example, if UCI for CLI measurement reporting is defined as UCI for CLI, it may be considered to determine the number of REs to be transmitted on a PUSCH for each UCI in the order of HARQ-ACK, CSI part 1, CSI part 2, and UCI for CLI, and to map the UCI to each RE. In other words, the number of REs to be transmitted on the PUSCH in the order of HARQ-ACK, CSI part 1, CSI part 2, and UCI for CLI is determined, and the UCI may be mapped to the PUSCH (and/or PUCCH) REs corresponding to the determined number of REs.

When CLI reporting is performed via L1/L2 signaling according to the method, the UE may perform the CLI reporting operation based on a (predefined) reporting time. (For CLI reporting) as there is no existing L1/L2 signaling procedure, no reporting time or computation time is described (or defined) (for CLI reporting), however, as explained with reference to FIG. 7, similar requirements (with respect to the reporting type and computation time) are described with respect to CSI reporting (or see section 5.4 of TS 38.214). The CSI computation delay requirement for the UE may be defined as shown in Table 7.

**[Table 7]**

| *µ* | ***Z₁* [symbols]** | | ***Z₂* [symbols]** | | ***Z₃* [symbols]** | |
|---|---|---|---|---|---|---|
| | *Z₁* | *Z'₁* | *Z₂* | *Z'₂* | ***Z₃*** | *Z'₃* |
| 0 | 22 | 16 | 40 | 37 | 22 | *X*₀ |
| 1 | 33 | 30 | 72 | 69 | 33 | *X*₁ |
| 2 | 44 | 42 | 141 | 140 | min(44,*X*₂+ KB₁) | *X₂* |
| 3 | 97 | 85 | 152 | 140 | min(97, *X*₃+ KB₂) | *X*₃ |
| 5 | 388 | 340 | 608 | 560 | min(388, X5+ KB3) | *X5* |
| 6 | 776 | 680 | 1216 | 1120 | min(776, X6+ KB4) | *X6* |

CSI computation delay corresponding to Z₃ in Table 7 above may be a reporting time according to the RSRP measurement. There are two cases for CLI measurements directed to the UE (RSSI-based and RSRP-based), and different computation delay requirements may be defined depending on which measurement the CLI measurement report performed based on L1/L2 signaling is based on. For example, in the case where CLI measurement reporting is performed based only on RSSI and RSRP as before, CLI measurement reporting based on RSRP (or CLI measurement reporting when indicated by SRS resource) may follow a value identical to or similar to the computation delay requirement of the CSI. In contrast, in case of the CLI measurement report based on RSSI (or CLI measurement report for CLI-RSSI resource), the reporting time of CLI measurement report may be indicated as a smaller value (or based on a smaller value) than the computation delay requirement of RSRP (in Table 7). That is, RSSI-based CLI measurements may have relatively smaller computation delay requirement or reporting time requirements than RSRP-based CLI measurements. Therefore, the gNB may instruct (the reporting time) according to such requirement.

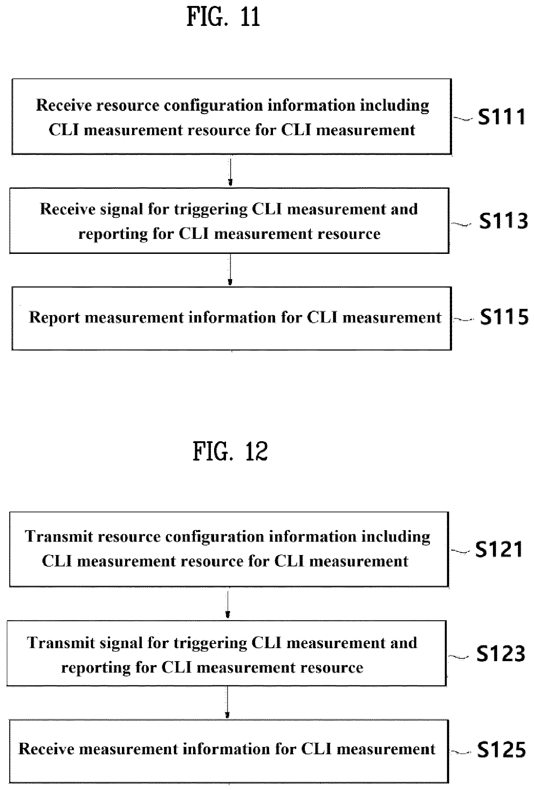

FIG. 11 is a diagram for explaining a method of performing CLI measurements by a UE.

Referring to FIG. 11, the UE may receive resource configuration information including CLI measurement resources related to the CLI measurement (S111). The resource configuration information may configure at least one of sounding reference signal (SRS) resources and CLI-received signal strength indicator (CLI-RSSI) resources as a resource for measuring the CLI (hereinafter, CLI measurement resource). The resource configuration information may be instructed or received from a BS via RRC signaling. Alternatively, the UE may obtain or receive the resource configuration information from a CSI configuration including non-zero power (NZP) channel state information - reference signal (CSI-RS) for measuring the CSI configured from the BS. In other words, the UE may receive the CSI configuration information including or configuring the CSI resources for measuring the CSI and the CLI measurement resources for measuring the CLI. As described above, the BS may trigger CLI measurement and/or reporting to the UE through the L1/L2 for sub-band full duplex (SBFD) or single frequency full duplex (SFFD) configuration and scheduling. The BS may configure or schedule the SBFD slot or the SFFD slot to minimize interference between DL transmission and UL reception (or intercell interference by adjacent UEs in UL transmission or DL reception at the UE) based on the CLI measurement information.

Then, the UE may receive from the BS a signal instructing/triggering CLI measurement and/or reporting for the CLI measurement resource (S113). The UE may determine that the CLI measurement and/or reporting is triggered when downlink control information (DCI) that triggers the reporting of channel state information (CSI) includes indication information for the CLI measurement resource. For example, if the DCI that triggers the CSI measurement/reporting indicates an ID for the CLI measurement resource, the UE may trigger the CLI measurement/reporting based on the DCI that triggers the CSI reporting/measurement.

In this case, the UE may perform CLI measurement for the CLI measurement resource indicated by the DCI. For example, if the CLI measurement resource indicated by the DCI is SRS, the UE may measure RSRP for the CLI measurement resource. If the CLI measurement resource indicated by the DCI is a CLI-RSSI resource, the UE may measure RSSI for the CLI-RSSI.

Then, the UE may report CLI measurement information for the measured CLI to the BS (S115). As described above, the CLI measurement information may be treated similarly to the existing UCI and reported to the BS via a PUCCH and/or a PUSCH. Here, the CLI may be a measurement of interference between a DL signal received from the BS and a UL signal transmitted by surrounding UEs.

For example, the UE may further include the CLI measurement information in the CSI measurement report triggered by the DCI and report the information to the BS. As in Alt. 1 of the section of the L1 L2 CLI measurement and reporting described above, the CLI measurement information may be included in the CSI Part 2 from among the hybrid automatic repeat request acknowledgement (HARQ-ACK), scheduling request (SR), CSI Part 1, and CSI Part 2 that constitute the UCI and reported to the BS. Alternatively, if the CLI measurement information is included in the CSI measurement report, the UE may further include a separate indicator in the UCI including the CSI measurement report to notify the BS that the CLI measurement information is included in the CSI measurement report. As described in Alt. 2 of the section "L1/L2 CLI measurement and reporting", a new UCI type for the CLI measurement report may be defined. Here, the newly defined UCI type for the CLI measurement report may be reported only on a PUSCH. That is, the UE may transmit the CLI measurement report by piggybacking the report on the PUSCH.

Alternatively, the UE may report measured CLI measurement information only when a preset condition is satisfied, even if CLI measurement/reporting is triggered by the DCI. For example, if the CLI measurement value exceeds a preset threshold, the UE may report the CLI measurement information to the BS as a result of satisfaction of the preset condition. As described above, the UE may report to the BS by including the CLI measurement information and/or the indicator in the UCI. In contrast, if the CLI measurement value is greater than or equal to a preset threshold, the UE may not report the CLI measurement information to the BS as a result of dissatisfaction of the preset condition. In this case, the UE may indicate through an indicator that a preset condition is not satisfied and therefore the CLI measurement information is not included in the UCI or CSI measurement report. The preset threshold may be configured differently for each SBFD slot and HD slot as described above.

FIG. 12 is a diagram for explaining a method for a BS to receive CLI measurement information from a UE.

Referring to FIG. 12, the BS may transmit resource configuration information including CLI measurement resources related to the CLI measurement to the UE (S121). The resource configuration information may configure at least one of sounding reference signal (SRS) resources and CLI-received signal strength indicator (CLI-RSSI) resources as a resource for measuring the CLI (hereinafter, CLI measurement resource). The BS may instruct/set resource configuration information for the CLI measurement resource to the UE through RRC signaling and/or CSI configuration.

Then, the BS may transmit to the UE a signal instructing or triggering CLI measurement and/or reporting for the CLI measurement resource (S213). For example, the BS may trigger CLI measurement/reporting for the UE through downlink control information (DCI) that triggers measurement/reporting of CSI. For example, the BS may indicate an ID for the CLI measurement resource through DCI that triggers the CSI measurement/reporting, thereby triggering CLI measurement/reporting for the CLI measurement resource corresponding to the ID.

The BS may trigger CLI measurement and/or reporting to the UE through the L1/L2 for sub-band full duplex (SBFD) or single frequency full duplex (SFFD) configuration and scheduling. The BS may configure or schedule the SBFD slot or the SFFD slot to minimize interference between DL transmission and UL reception (or intercell interference by adjacent UEs in UL transmission or DL reception at the UE) based on the CLI measurement information.

Then, the BS may receive the CLI measurement information triggered by the DCI from the UE (S125). As described above, the CLI measurement information may be treated similarly to the existing UCI and reported to the BS via a PUCCH and/or a PUSCH.

For example, the BS may receive a report of CLI measurement information through CSI measurement report triggered by the DCI. As described in Alt. 1 of the section of L1 L2 CLI measurement and reporting described above, the CLI measurement information may be included in the CSI Part 2 from among the hybrid automatic repeat request acknowledgement (HARQ-ACK), scheduling request (SR), CSI Part 1, and CSI Part 2 that constitute the UCI and reported to the BS. Alternatively, the BS may determine whether the CLI measurement information is included in the CSI measurement report through an indicator included in the CSI measurement report.

For example, the BS may receive the CLI measurement information through the CSI measurement report or UCI only when a preset condition is satisfied, even if the CLI measurement/reporting is triggered by the DCI. For example, if the CLI measurement value exceeds a preset threshold, the CLI measurement information may be reported from the UE. In contrast, if the CLI measurement value is equal to or less than a preset threshold, the CLI measurement information may not be reported to the BS. In this case, the BS may previously know whether the CLI measurement information is included in the UCI or CSI measurement report according to the preset condition through the indicator.

In this way, interference between inter-cell UEs may be minimized through scheduling/configuration of SBFD slots and/or SFFD slots based on the CLI measurement information by introducing a method of CLI measurement and/or reporting through L1/L2. Alternatively, CLI measurement/reporting at the L1/L2 may be efficiently triggered and reported via the existing DCI types that trigger CSI measurements/reports without defining and introducing a new triggering scheme.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

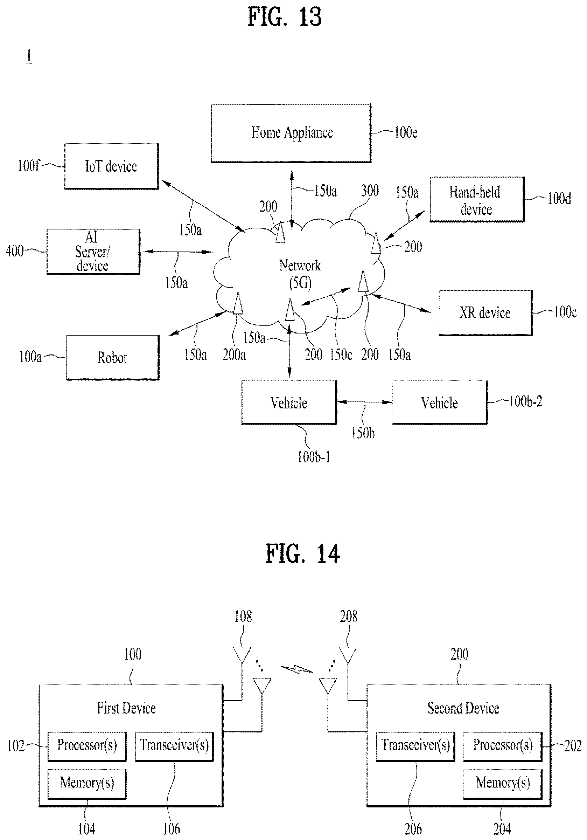

FIG. 13 illustrates a communication system applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 14 illustrates a wireless device applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an example, a first wireless device 100 or a UE may include a processor 102 and a memory 104 connected to the RF transceiver. The memory 104 may include at least one program for performing an operation related to the embodiments described in FIGS. 9 to 12.

In detail, the processor 102 controls the RF transceiver 106 to receive resource configuration information including CLI measurement resources related to the CLI measurement, receive triggering of CLI measurement for the CLI measurement resources, and report measurement information for the CLI measurement to a BS, and in this case, the CLI measurement may be triggered based on downlink control information (DCI) that triggers reporting of channel state information (CSI) including indication information for the CLI measurement resources.

Alternatively, a chipset may be configured including the processor 102 and the memory 104. In this case, the chipset includes at least one processor and at least one memory operably connected to the at least one processor and which, when executed, causes the at least one processor to perform an operation, the operation including receiving resource configuration information including a CLI measurement resource related to the CLI measurement, triggering CLI measurement for the CLI measurement resource, and reporting measurement information for the CLI measurement to a BS, and in this case, the CLI measurement may be triggered based on indication information for the CLI measurement resource being included in downlink control information (DCI) that triggers reporting of channel state information (CSI). The at least one processor may perform operations for the embodiments described with reference to FIGS. 9 to 12 based on a program included in the memory.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to an embodiment, the BS or the network may include a processor 202, a memory 204, and/or a transceiver 206. The processor 202 controls the transceiver 206 or the RF transceiver to transmit resource configuration information including CLI measurement resources related to the CLI measurement to the UE, trigger CLI measurement for the CLI measurement resources from the UE, and receive a report of the measurement information for the CLI measurement, and in this case, the CLI measurement may be triggered based on downlink control information (DCI) that triggers reporting of channel state information (CSI) including indication information for the CLI measurement resources.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of application of wireless devices to which the present disclosure is applied

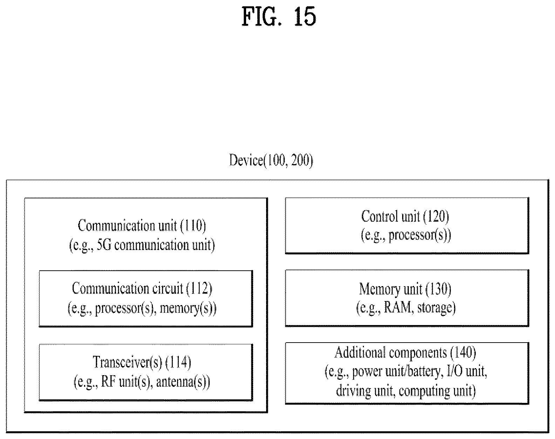

FIG. 15 illustrates another example of a wireless device applied to the present disclosure.

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### Industrial Availability

The embodiments of the present disclosure as described above may be applied to various mobile communication systems.

## Claims

1. A method of performing measurement related to cross link interference (CLI) by a user equipment (UE) in a wireless communication system, the method comprising:
receiving resource configuration information including a CLI measurement resource related to a CLI measurement;
receiving triggering of the CLI measurement for the CLI measurement resource; and
reporting measurement information for the CLI measurement to a base station (BS),
wherein the CLI measurement is triggered based on that downlink control information (DCI) that triggers reporting of channel state information (CSI) includes indication information for the CLI measurement resource.

2. The method of claim 1, wherein the resource configuration information includes information about at least one of sounding reference signal (SRS) resources and CLI-received signal strength indicator (CLI-RSSI) resources.

3. The method of claim 1, wherein the resource configuration information is received through CSI configuration information including non-zero power (NZP) channel state information - reference signal (CSI-RS) for measuring the CSI.

4. The method of claim 1, wherein the CLI measurement resource is configured based on a sub-band full duplex (SBFD) slot or a single frequency full duplex (SFFD) slot.

5. The method of claim 1, wherein the CLI measurement information is included in CSI reporting triggered by the DCI and reported to the BS.

6. The method of claim 1, wherein the CLI measurement information is included in uplink control information (UCI) and reported to the BS through a physical uplink control channel (PUCCH) or a physical uplink shared channel (PUSCH).

7. The method of claim 1, wherein the CLI measurement information is reported to the BS as CSI Part 2 in uplink control information (UCI) including hybrid automatic repeat request acknowledgement (HARQ-ACK), scheduling request (SR), CSI Part 1, and the CSI Part 2.

8. The method of claim 1, wherein the CLI measurement information is piggybacked on a physical uplink shared channel (PUSCH) and reported to the BS.

9. The method of claim 1, wherein the CLI measurement information is reported to the BS when a value of the CLI measured for the CLI measurement resource is greater than or equal to a pre-configured threshold.

10. A computer-readable recording medium having recorded thereon a program for executing the method of claim 1.

11. A user equipment (UE) for performing measurement related to cross link interference (CLI) in a wireless communication system, the UE comprising:
a radio frequency (RF) transceiver; and
a processor connected to the RF transceiver,
wherein the processor controls the RF transceiver to receive resource configuration information including a CLI measurement resource related to a CLI measurement, receive triggering of the CLI measurement for the CLI measurement resources, and report measurement information for the CLI measurement to a base station (BS), and
the CLI measurement is triggered based on that downlink control information (DCI) that triggers reporting of channel state information (CSI) includes indication information for the CLI measurement resource.

12. A chip set for performing measurement related to cross link interference (CLI) in a wireless communication system, the chip set comprising:
at least one processor; and
at least one memory operably connected to the at least one processor and, when executed, cause the at least one processor to perform operations including:
receiving resource configuration information including a CLI measurement resource related to a CLI measurement; receiving triggering of CLI measurement for the CLI measurement resource; and reporting measurement information for the CLI measurement to a base station (BS), and
the CLI measurement is triggered based on that downlink control information (DCI) that triggers reporting of channel state information (CSI) includes indication information for the CLI measurement resource.

13. A method of receiving reporting of measurement information related to cross link interference (CLI) by a base station (BS) in a wireless communication system, the method comprising:
transmitting, to a user equipment (UE), resource configuration information including a CLI measurement resource related to a CLI measurement;
triggering the CLI measurement for the CLI measurement resource to the UE; and
receiving reporting of the measurement information for the CLI measurement,
wherein the CLI measurement is triggered based on that downlink control information (DCI) that triggers reporting of channel state information (CSI) includes indication information for the CLI measurement resource.

14. The method of claim 13, wherein the CLI measurement resource is configured based on a sub-band full duplex (SBFD) slot or a single frequency full duplex (SFFD) slot.

15. A base station (BS) for receiving reporting of measurement information related to cross link interference (CLI) in a wireless communication system, the BS comprising:
a radio frequency (RF) transceiver; and
a processor connected to the RF transceiver,
wherein the processor controls the RF transceiver to receive resource configuration information including CLI measurement resources related to a CLI measurement from a user equipment (UE), trigger CLI measurement for the CLI measurement resources to the UE, and receive reporting of measurement information for the CLI measurement, and
the CLI measurement is triggered based on that downlink control information (DCI) that triggers reporting of channel state information (CSI) includes indication information for the CLI measurement resource.
